Europäisches Patentamt

European Patent Office

Office européen des brevets

(11) Publication number: **0 192 364**
**A1**

## EUROPEAN PATENT APPLICATION

(21) Application number: 86300633.4

(22) Date of filing: 30.01.86

(51) Int. Cl.⁴: **A 23 F 5/10**
**A 23 F 5/04**

(30) Priority: 01.02.85 US 697180

(43) Date of publication of application:
27.08.86 Bulletin 86/35

(84) Designated Contracting States:
AT BE CH DE FR GB IT LI LU NL SE

(71) Applicant: GENERAL FOODS CORPORATION
250 North Street
White Plains, N.Y. 10625(US)

(72) Inventor: Craig, William Hamilton
31, Parley Road
Ridgefield Connecticut 06877(US)

(72) Inventor: Anderson, Robert Alexander
RR No.1 Box 341A
Pound Ridge New York 10576(US)

(72) Inventor: Barber, Kathleen J.
293, Benedict Avenue
Tarrytown New York 10591(US)

(74) Representative: Baillie, Iain Cameron et al,
c/o Ladas & Parry Isartorplatz 5
D-8000 München 2(DE)

(54) Coffee of improved extractability, quality and aroma delivery.

(57) A process for preparing a roasted whole bean or roasted and ground coffee of increased extractability improved aroma delivery, and excellent shelf-life stability, is disclosed. The coffee is packaged at a moisture of about 7% to about 13% by weight with a carbon dioxide and oxygen sorbent. Degassing of the coffee prior to packaging is unnecessary and undesirable.

EP 0 192 364 A1

Croydon Printing Company Ltd.

se 3377

## COFFEE OF IMPROVED EXTRACTABILITY, QUALITY AND AROMA DELIVERY

### TECHNICAL FIELD

This invention relates to a roasted and ground coffee product which exhibits improved extractability and an improved rate and degree of coffee aroma release. More specifically, the invention relates to the production of an improved roasted and ground coffee by packaging the roasted and ground coffee with a carbon dioxide/oxygen sorbent and an increased moisture level.

### BACKGROUND

The optimization of the production and packaging of roasted and ground coffee has been the subject of extensive research efforts. Of primary importance has been the quality of the roasted and ground coffee brew in terms of flavor and aroma, and the economics of the roasted and ground coffee process. Aside from the selection of coffee bean blends, efforts have been primarily directed toward optimizing the roasting, quenching, grinding, degassing and packaging steps. A review of the prior art makes it readily apparent that previous efforts have consistently resulted in trade-offs, as for example sacrificing processing efficiency for aroma quality, extractability for stability, and so on.  A further advance to the roasted and ground coffee art to eliminate such sacrifices is thus needed.

Pitchon et al. in U.S. Patent No. 3,482,987 disclose a process for removing undesirable flavor and aroma volatiles, and carbon dioxide, from poor quality roasted coffee by wetting the roasted coffee to a moisture of between 10% and 30% by weight, tempering the coffee to allow moisture equilibration, and then further processing the coffee as by percolation.  According to Pitchon et al., tempering means curing, holding or retention of the beans at ambient or elevated temperature for a time sufficient to allow the moisture to reach the interior of the beans.  However, it is disclosed that tempering in excess of 24 to 30 hours produces flavor degradation.

Patel et al. in U.S. Patent No. 3,549,380 teach a process for uniformly prewetting roasted and ground coffee during the loading of the coffee into an extraction column to a moisture of between 10% and 30% by weight.  Patel et al. incorporate the teachings of Sivitz and Foote, Coffee Processing Technology, Avi Publishing Company, 1963, Vol. 1, page 338, wherein it is taught that, among other advantages, prewetting prior to percolation "allows more fresh coffee solubles to be released before hydrolysis products and tars push through."  It is further noted in the Sivitz and Foote text that prewetting prior to percolation improves cup flavor, cup cleanliness, and enables greater liberation of gases from the coffee.  However, it is to be recognized that percolation conditions as part of soluble coffee processing differ greatly from extraction conditions for immediate brew preparation from roasted and ground coffee.

U.S. Patent No. 3,715,215 to Balling et al. teaches intermittent quenching steps during coffee roasting to decrease the carbon dioxide and undesirable aroma content of the roasted coffee. It is disclosed by Balling et al. that the moisture content of the roasted beans may thus be increased to between 3% and 40% by weight.

In European Patent Application EP 25,617, Cooper et al. disclose a process for increasing the headspace aroma of roasted and ground or flaked coffees as measured by gas chromatograph (G.C.) through the addition of moisture to conventionally quenched coffee. Though it is disclosed by Cooper et al. that sufficient moisture may be added to the roasted and ground coffee to raise its moisture from a typical 1% to 4% level to a final moisture of between 3% and 9% by weight, it is taught that "when the moisture level is above about 6%, the coffee tends to stale faster." Therefore, Cooper et al. teach final moisture levels of preferably between 3% and 6% to achieve an increase in G.C. headspace aroma intensity.

Klein et al. in U.S. Patent No. 4,267,200 disclose aggregate coffee flake particles resultant from roll milling of a low-moisture flake (1% to 3.5% by weight) and a high-moisture flake (4.5% to 7% by weight). Said aggregate is taught to provide improved extractability, high initial aroma levels, and high bed permeability versus control flaked coffees. Additionally, Bruce, III, in U.S. Patent No. 4,331,696 discloses a process whereby an extra thin flaked coffee is produced having a moisture content of from about 2.5% to about 9.0% by weight, though it is recognized therein that "moisture contents above 7.0% are less desirable."

Generally, it is well-recognized that roasted and ground coffee is extremely sensitive to the moisture level at which it is packaged. Moisture and oxygen are recognized as the most important factors affecting roasted and ground coffee shelf-life. The interaction of moisture and oxygen is discussed in Sivitz and Desrosier, Coffee Technology, Avi Publishing Co., p. 286, hereby incorporated by reference.

Roasted and ground coffee characteristically releases gases, primarily carbon dioxide, after roasting and both during and after grinding. Typically, roasted and ground coffee is allowed to degas for a period of time, usually on the order of 2 hours, prior to being packaged. This is considered necessary to prevent the undesirable release of large amounts of carbon dioxide gas within a sealed package, as for example a can or bag, thereby causing a ballooning effect or more seriously the failure of the packaging material. U.S. Patent No. 4,069,349 to Shaw discloses a process whereby a solid, gas evolving product is packed within a pouch which is heat sealed except that a small tortuous passage is left for the exit of evolved gases. The pouches are allowed to fully degas in a storage chamber containing oxygen at atmospheric pressure, and then the pouches are fully sealed.

Several references disclose methods by which gases are sorbed or otherwise neutralized within the sealed package so as to prevent a build-up of internal pressure. U.S. Patent No. 2,430,663 to Behrman teaches combining the carbon dioxide evolved by roasted and ground coffee with an anion-exchange material within a gas impervious enclosure. U.S.

Patent Nos. 4,366,179, 4,406,813 and 4,490,394, disclose various sorbent materials which are useful for sorbing oxygen and/or carbon dioxide gases within a sealed vessel. The '179 patent to Nawata et al. in particular discloses an oxygen and carbon dioxide sorbent which is contemplated for use with a roasted and ground coffee package.

## SUMMARY OF THE INVENTION

It has been found according to the present invention that an improved roasted and ground coffee product is produced by loading roasted and ground coffee at a moisture of between 7% and 13% by weight into a gas impervious vessel containing a carbon dioxide and oxygen sorbent and immediately sealing said vessel. Roasted and ground coffee produced according to the invention is found to exhibit increased extractability of brew solids and an increased rate of coffee aroma delivery upon opening of the vessel. Further, conventional degassing of the roasted and ground coffee prior to packaging may be eliminated, thereby greatly improving the efficiency of the roasted and ground coffee process and the aromatic quality of the roasted and ground coffee itself. Additionally, the roasted and ground coffee is found to exhibit excellent shelf-life stability, despite the increased moisture level.

## DETAILED DESCRIPTION OF THE INVENTION

The present invention may be employed regardless of the green coffee blend and with coffee which is fully, partially or non-decaffeinated. The beans may be roasted by any method known to the art, as for example by conventional roasting, gun-puffing or the low density coffee process of U.S. Patent No. 4,349,573. The roasted beans are then quenched, as is known in the art, once the beans have reached the desired roast color. Quenching through the addition of water generally increases the roasted coffee bean moisture to about 1% to 7% and typically to about 2.5% to 6% by weight. As will be seen, the invention contemplates a final roasted and ground moisture of about 7% to about 13% by weight. The moisture necessary to raise the roasted and ground coffee moisture to about 7% to about 13% by weight may be added during the quench step. However, it has been found to be highly undesirable to quench the roasted beans to this elevated moisture level for several reasons, particularly because of the diminished flowability of roasted and ground coffee at such an elevated moisture level and the likelihood of fouling downstream processing equipment such as the grinder or packaging equipment.

The roasted beans are then typically ground in conventional grinding equipment, generally so as to fit one of the three most common grind specifications, Drip, Electric Perc, and Fine Grind. The invention has also been found to be applicable to non-ground roasted beans, termed roasted whole beans, which by-pass the roasting step. Handling of roasted whole beans is substantially the same as the handling of roasted and ground coffee beans in employing the present invention. Attention will be drawn to the few instances where handling of the two bean types differs. Otherwise, the discussion henceforth will be limited to roasted and ground coffee, but it shall be remembered that such discussion is equally applicable to roasted whole beans.

Once ground, the roasted and ground coffee is generally conveyed directly to the packaging equipment. The coffee may be packaged in any packaging vessel known to the art which is substantially gas and moisture impervious, as for example a can or bag. Generally, the hold-up time between grinding and actual loading of the roasted and ground coffee into the vessel is less than 90 minutes, typically less than 60 minutes, preferably less than 30 minutes and most preferably less than 5 minutes. In the case of roasted whole beans, the hold-up time between roasting and actual loading into the packaging vessel is generally less than 90 minutes, typically less than 60 minutes, preferably less than 30 minutes, and most preferably less than 5 minutes. According to the present invention, it is entirely unnecessary to degas the coffee prior to packaging, and the hold-up time described above is primarily due to the processing realities of a commerical coffee operation. In a preferred embodiment of the present invention, the roasted and ground coffee is fed directly from the grinder into the packaging vessel, thereby preventing the loss of valuable coffee aromatics through degassing. Alternatively, the roasted and ground coffee is maintained in a piece of equipment at a positive pressure, as for example 20 psia, thereby retarding the degassing of the roasted and ground coffee during the hold-up time necessitated by commercial realities.

The packaging vessel is then fed, either simultaneously or sequentially, roasted and ground coffee, a carbon dioxide and oxygen sorbent, and moisture, if said moisture was not added during the quench step. The carbon dioxide and oxygen sorbent is of a kind which is known in the art, as for example the absorbent disclosed by Nawata et al. in U.S. Patent No. 4,366,179, the description of which is hereby incorporated by reference. The moisture may be added as water, steam and/or ice, and may contain coffee aromas recovered from elsewhere in the coffee operation. In one embodiment of the invention, the moisture to be added contains coffee aromas and is homogenized with coffee oil prior to said addition. In any case, said moisture is added so as to increase the roasted and ground coffee moisture to between 7% and 13% by weight, preferably to between 8% and 11% by weight, and most preferably to between 9% and 10% by weight. The increased moisture of the roasted and ground coffee has generally been found to improve the functionality of the carbon dioxide and oxygen sorbent employed. The packaging vessel containing the sorbent and moisturized roasted and ground coffee is then hermetically sealed, as is known in the art, typically under vacuum or with an inert gas flush.

In a preferred embodiment of the invention, the carbon dioxide and oxygen sorbent is contained in a cellulose packet which is introduced to the coffee packaging vessel first. The roasted and ground coffee is then introduced to the vessel atop the sorbent packet. Finally, the moisture is added as a water injection, typically at ambient temperature. Said water injection is typically made at sufficient pressure to penetrate the roasted and ground coffee bed to substantially near the bottom of the packaging vessel, preferably to a depth of at least two thirds of the coffee bed as measured from the top. The degree of water penetration is essential to ensure homogeneous moisturizing of the roasted and ground coffee, which is in turn important to the proper functioning of the invention.

A second feature which has been found to influence the rate and degree of moisture homogeneity is the temperature of the roasted and ground coffee when the moisture is added. Generally, the roasted and ground coffee is about ambient temperature, typically it is at least 90°F, and preferably it is at least 110°F. It has been found that moisture equilibration is essentially accomplished through an increase in the relative humidity within the sealed packaging vessel. For example, the relative humidity with 9% moisture roasted and ground coffee has been measured at about 60% whereas at 5% moisture it measures less than 40%. According to the invention, it has been found that moisture equilibration is at least 90% complete after 24 hours, where moisture equilibration is evaluated by measuring the moisture of the roasted and ground coffee at various points within the packaging vessel. This rapid equilibration of moisture is particularly important to the practice of the present invention.

The roasted and ground coffee packaged according to the invention is found to exhibit an excellent quality roasted and ground coffee aroma when the vessel is opened, said excellent quality aroma being rapidly released to the atmosphere at a high level of intensity. Additionally, said roasted and ground coffee is found to exhibit an increased degree of extractability of coffee solids as compared to an equal weight of control roasted and ground coffee. This increased degree of extractability enables preparation of a coffee brew with a standard level of brew solids at a reduced roasted and ground coffee recipe level. Further, the roasted and ground coffee of the present invention displays excellent shelf stability, despite the increased moisture level which typically diminishes shelf-life stability significantly. The invention is further described and illustrated by the following example.

## EXAMPLE

A blend of green coffee beans was roasted to a 65 roast color in a conventional roaster and quenched with water to an average moisture of 5% by weight. The roasted coffee was then ground to a conventional Automatic Drip grind distribution.

A portion of said roasted and ground coffee (A) was packed in a 16 oz. can with an oxygen and carbon dioxide sorbent. Water was then injected into the can so as to increase the moisture of the roasted and ground coffee to 9% by weight, said injection amounting to about 18.2 grams. The water was injected through a nozzle with a water pressure of 110 psi and pentrated to more than two thirds of the depth of the coffee bed. The can was then hermetically sealed. The total elapsed time from roasting, through grinding, and through packaging was 15 minutes.

A second portion of said roasted and ground coffee (B) was packed in a 16 oz. can alone and hermetically sealed. A hold-up time of 2 hours was allowed for degassing of the coffee after the grinding and before packaging.

AROMA

Coffee A was found to have substantially more headspace aroma than coffee B as measured by gas chromatograph, both at zero time and over storage. More particularly, at zero time, coffee A measured 10% more total headspace volatiles than coffee B and after 12 week storage at 70°F, coffee A had 32% more total headspace aroma. This quantitative characterization of the difference in headspace aroma was further substantiated through organoleptic evaluation by an expert panel in both instances, with coffee A being characterized as fresher and of better aroma quality than coffee B.

EXTRACTABILITY

A brew of coffee A was prepared at a recipe level reduced by 4% by weight roasted and ground coffee on a dry basis as compared to a brew prepared from coffee B. Despite this recipe reduction, a slightly higher level of brew solids was delivered by coffee A, on the order of 1% higher. The brew colors of brew A and brew B were compared and it was found that the brews possessed equivalent brew colors.

FLAVOR AND STABILITY

Coffee A was found to have a good quality roasted and ground coffee flavor and excellent shelf-life stability by an expert panel and was judged to be equivalent with Coffee B in both regards. This finding was confirmed by triangle testing.

CLAIMS :

1.   A process for preparing a roasted coffee of increased extractability, an improved rate and degree of coffee  aroma release, and excellent shelf-life stability which comprises :
     (a)   roasting green coffee to a desired roast color;
     (b)   quenching said roasted coffee by adding moisture;
     (c)   adjusting the moisture of said roasted coffee to within the range 7% to 13% by weight; and
     (d)   packaging said moisture-adjusted roasted coffee in a gas impervious vessel which vessel also contains a carbon dioxide and oxygen sorbent.

2.   A process according to claim 1 wherein said roasted coffee of step (c) is selected from either roasted and ground coffee or roasted whole coffee beans.

3.   A process according to either of claims 1 and 2 wherein said quenched coffee of step (b) is loaded into said gas impervious vessel at a moisture level of 1% to 5% and moisture is added to increase said moisture level to 7% to 13% by weight.

4.   A process according to claim 3 wherein said moisture is added as water.

5.   A process according to either of claims 3 and 4 wherein said moisture is added to said roasted coffee subsequent to said roasted coffee being introduced to said gas impervious vessel.

6.   A process according to any one of claims 3 to 5 wherein said moisture is injected to at least two thirds the depth of the coffee as measured from the top.

7.   A process according to any one of claims 1 to 6 wherein said moisture level is 8% to 11% by weight.

8.    A process according to any one of claims 2 to 7 wherein said roasted and ground coffee is held for less than 90 minutes between grinding and packaging within a gas impervious vessel.

9.    A process according to any one of claims 2 to 7 wherein said roasted whole coffee beans are held for less than 90 minutes between roasting and packaging within a gas impervious vessel.

10.    A process according to either of claims 7 or 8 wherein said coffee is held for less than 60 minutes.

11.    A process according to either of claims 7 and 8 wherein said coffee is held for less than 30 minutes.

12.    A process according to either of claims 7 and 8 wherein said coffee is held for less than 5 minutes.

13.    A process according to any one of claims 4 to 12 wherein said moisture contains coffee aromas.

# EUROPEAN SEARCH REPORT

European Patent Office

0192364

Application Number

EP  86 30 0633

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | EP-A-0 025 617 (PROCTER & GAMBLE) * Claims 1,3,6; page 10, lines 22-35 * | 1-12 | A 23 F 5/10 A 23 F 5/04 |
| D,Y | EP-A-0 036 575 (MITSUBISHI GAS CHEMICAL CO.) * Claims 1,16; examples * & US - A - 4 366 179 | 1-12 | |
| A | US-A-2 167 085 (C. PAGE) * Claims 1,2; page 2, column 1, line 50 - column 2, line 7; page 2, column 2, lines 2-24 * | 1-13 | |
| P,A | EP-A-0 142 903 (DOUWE EGBERTS) * Claims 1,14,15; examples * | 1,8-12 | TECHNICAL FIELDS SEARCHED (Int. Cl.4) |
| D,A | GB-A-1 145 214 (GENERAL FOODS) * Page 2, lines 67-84 * & US - A - 3 482 987 | 1,3 | A 23 F |
| A | US-A-2 017 892 (P. CLARY) | | |
| A | US-A-4 053 652 (J. MAHLMANN) | | |

The present search report has been drawn up for all claims

| Place of search | Date of completion of the search | Examiner |
|---|---|---|
| THE HAGUE | 18-04-1986 | DESMEDT G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82